# EUROPEAN PATENT SPECIFICATION

(11) **EP 3 516 291 B1**
(45) Date of publication and mention of the grant of the patent: **10.03.2021**
(21) Application number: 17762079.6
(22) Date of filing: 29.08.2017
(51) Int. Cl.: F21V 1/12, G03B 15/07

(54) **SOFTBOX**
LICHTWANNE
BOITIER SOUPLE

(30) Priority: 20.09.2016 EP 16461556
(43) Date of publication of application: 31.07.2019
(73) Proprietor: Adamczyk, Hubert, 30-830 Krakow (PL)
(72) Inventor: Adamczyk, Hubert, 30-830 Krakow (PL)
(74) Representative: Hepp Wenger Ryffel AG
(86) International application number: PCT/EP2017/071590
(87) International publication number: WO 2018/054657

(56) References cited:
- WO-A1-2013/098678
- WO-A1-2015/070311
- US-A- 5 117 344
- US-A1- 2011 170 276

## Description

The present application concerns softboxes for a photographic light, in particular a softbox according to the independent claim.

Softboxes are used by photographers to create an even and diffused light by directing light through some diffusing material, or by "bouncing" light off a second surface to diffuse the light. The best known form of bouncing source is the umbrella light where the light from the bulb is bounced off the inside of a metalized umbrella to create a soft indirect light.

Softboxes are generally rather large and have rigid walls. The softboxes are therefore rather unhandy for transportation. Hence, there is a need for handy, easily portable softboxes.

US 2011/0170276 A1 discloses a photographic lightning apparatus with a telescopic strut.

US 5,117,344 A describes an illuminated balloon assembly with a neck portion to facilitate filling of gas within the interior chamber.

US 2011/0255851 A1 suggests a collapsible softbox for use with a portable light source. The softbox comprises side panels that may collapse toward each other when a front panel is removed. In the collapsed state, the softbox can be stored and transported.

WO2013/098678A1 discloses a softbox with support rods for holding a conveying cloth. The rods may be folded into two or more rod portions.

Collapsible softboxes are suitable for smaller flashlights. However, with larger lights the collapsible structure might become unstable.

There is therefore a need for a stable transportable softbox suitable for larger photographic studiolights.

It is an object of the present invention to overcome the above mentioned drawbacks. In particular, it is an object to provide an easily transportable softbox suitable for larger photographic studiolights.

The problem is solved with a softbox according to the independent claim. In particular, with a softbox for a photographic light comprising a compressed and an expanded configuration. The softbox comprises a frame and at least one, preferably multiple, poles connectable or connected to the frame. The poles are decompressible to expand the softbox from the compressed to the expanded configuration, wherein the at least one pole is inflatable.

The softbox might be used with flashlights or with a constant lightening such as LED.

In a compressed configuration, the softbox is small and can be easily transported. For use, the pole(s) are decompressed to achieve an expanded configuration of the softbox. A construction with decompressed poles provides a reliably stable softbox also for larger studiolights used by photographers.

At least one of the poles is inflatable. Inflation of poles is a simple way of decompressing the poles.

The at least one pole are preferably inflatable by gas. The poles might be arranged such that the poles are inflating automatically if an opening for inflation is opened. Alternatively, the poles might be inflated by blowing or pumping of air into the poles. Instead of air, another gas such as helium might be used.

In an alternative preferred embodiment, the at least one pole is inflatable by liquid. The poles might e.g. be inflated with water or a saline solution.

Alternatively, the pole(s) comprise an integrated compressible and decompressible filling structure. Such a compressible filling might be compressed at least one time, preferably multiple times. The pole(s) can be compressed and the softbox stored and transported in a compressed state e.g. in a suitable box. By removing pressure on the pole(s), the filling will decompress resulting in an expansion of the pole(s) and hence the softbox. A suitable filling material is a compressible elastomer or foam. An outer wall of the pole(s) might be formed of lightweight fabric. In order to decompress the pole, air or another suitable gas might be introduced into the pole and in contact with the filling material. By introducing gas into the pole(s) with filling material, it is possible to provide stiff pole(s).

The frame of the softbox preferably comprises or is made of at least one fabric such as, for example, liquid crystal polymer, poly-ethylene naphtalate or dimensionally stable polyester. Alternative fabrics to be used are Dacron ®, nylon, Spectra ®, or polyester. Fabric is foldable and therefore a suitable material for compressible and expandable softboxes. Further, fabric is light and therefore easily transportable.

Preferably, the frame comprises an outer side being non-reflective and an inner side being reflective. The inner side reflects the light of the flash or constant light and therewith providing a soft indirect lightening.

The outer side is preferably made of a non-reflective fabric.

The inner side might be a cover of reflective material in silver or with color. Other reflective colors might be used. Alternatively, the inner side might be a fabric in such a color.

The inner and the outer side might be permanently attached to each other e.g. through sutures. Alternatively, the two sides might be releasably attached e.g. with magnets or hook and loop fastener also known under the trademark name Velcro ®.

It is also possible, that the sides are indirectly attached, through the poles. This means that both sides are attached to the poles and not directly to each other.

Preferably, the softbox comprises four, six or eight poles. Depending on the preferred form of the softbox, a suitable number of poles is used in the softbox. Hence, four poles are used for a cubic softbox, six for a hexagonal and so one.

Besides four, six or eight poles, 1, 2, 3, 5, 7 or any other suitable number might be used. There might also be more poles such as 12, 13, 14, 15, or 16 poles side panels between the poles.

If one pole is used, the pole might be in an arc-shape to provide the softbox. One pole is also suitable to be used with a standard reflector.

The at least one pole is preferably made of a flexible material. With a flexible material, compression and decompression of the poles is easily achievable. Suitable flexible material for the poles is polyethylene, polyurethane or a thermoplastic polyurethane.

Preferably, the softbox comprises a lamp fixation portion to fixate the softbox to a light. With the fixation portion, the softbox can easily be attached to the flashlight or constant light. The softbox is preferably attached to the light with a speedring.

The softbox has preferably a dimension of between 30 x 30 cm to 250 x 250 cm. These dimensions are used in photo-studios depending on the needs of the light.

The pole(s) are preferably sutured to the frame. Suturing provides a constant and reliable connection between the frame and the pole(s). There is a low risk of detachment e.g. during expansion.

Alternatively, the poles might be detachably connected to the frame e.g. by a hook and loop fastener. A detachable connection allows separate storing of the frame and the poles. Further, a frame might have multiple attachment sites allowing the frame to be used with different numbers of poles depending on the need. Therefore, the frame might e.g. be used with four poles for one photo-session and six or eight in the other session.

Alternatively, the pole(s) are detachably connected to the frame by magnets.

In an alternative preferred embodiment, the pole(s) are embedded into the frame. Therewith, a constant and reliable connection between the frame and the pole(s) is achieved. There is a low risk of detachment e.g. during expansion.

Further aspects of the invention are described with reference to the following schematic figures:
- Fig. 1:: a schematic view of an expanded softbox according to the invention and
- Fig. 2:: a schematic view of a collapsed softbox according to the invention.

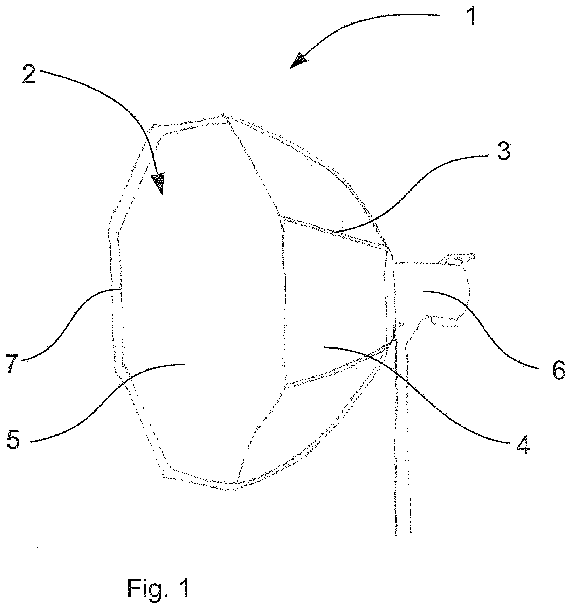

Figure 1 schematically shows an expanded softbox 1 according to the invention. The softbox 1 comprises an expandable frame 2 and eight poles 3 (for illustrative reasons, only one pole is provided with a reference number). The poles 3 are inflatable with air through a port (not shown). The poles 3 are attached to the frame 2 with a hook and loop fastener (not shown).

The frame comprises an outer side 4 made of a black fabric. An inner side 5 is a reflective cover sutured to the outer side 4 along a suturing line 7. The poles 3 are made of polyurethane. The softbox is attached to a flashlight 6.

The softbox has a dimension of 250 x 250 cm.

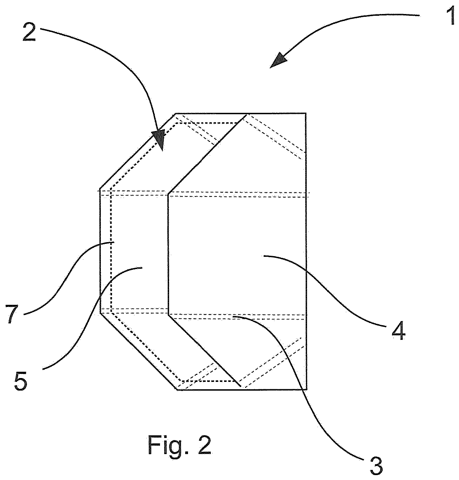

Figure 2 schematically shows a softbox 1 in a collapsed configuration. For illustrational reasons, the softbox 1 is only folded once. However, the softbox 1 might be folded multiple times e.g. for transportation or storing. The softbox 1 in figure 2 also comprises a frame 1 with an outer side 4 and an inner side 5.

The poles 3 in figure 2 are integrated into the frame 2. The poles can be inflated through air through a port (not shown).

## Claims

1. A softbox (1) for a photographic light (6) having a compressed and an expanded configuration, wherein the softbox (1) comprises a frame (2) and at least one, preferably multiple, poles (3) connectable or connected to the frame (2), **characterized in that** the poles (3) are decompressible to expand the softbox (1) from the compressed to the expanded configuration,
**characterised in that** the at least one pole (3) is inflatable.

2. The softbox (1) according to claim 1, wherein the at least one pole (3) is inflatable by gas.

3. The softbox (1) according to claim 1, wherein the at least one pole (3) is inflatable by liquid.

4. The softbox (1) according to claim 1, wherein the at least one pole (3) comprises a compressible and decompressible filling.

5. The softbox (1) according to any preceding claim, wherein the frame (2) comprises or is made of at least one fabric.

6. The softbox (1) according to any preceding claim, wherein the frame comprises an outer side (4) being non-reflective and an inner side (5) being reflective.

7. The softbox (1) according to any preceding claim comprising four, six or eight poles (3).

8. The softbox (1) according to any the preceding claim, wherein the at least one pole (3) is made of a flexible material , preferably polyurethane.

9. The softbox (1) according any preceding claim comprising a lamp fixation portion to fixate the softbox (1) to a light (6) .

10. The softbox (1) according to any preceding claim having a dimension of between 30 x 30 cm to 250 x 250 cm.

11. The softbox (1) according to any preceding claim, wherein the at least one pole (3) is sutured to the frame (2).

12. The softbox (1) according to any of claims 1-10, wherein the at least one pole (3) is detachably connected to the frame (3), preferably by a hook and loop fastener.

13. The softbox (1) according to any of claims 1-10, wherein the at least one pole (3) is detachably connected to the frame (2) by magnets.

14. The softbox (1) according to any preceding claim, wherein the at least one pole (1) is embedded into the frame (2).

## Patentansprüche

1. Softbox (1) für eine fotografische Leuchte (6) mit einer komprimierten und einer expandierten Konfiguration, wobei die Softbox (1) einen Rahmen (2) und mindestens eine, vorzugsweise mehrere, Stangen (3) umfasst, die mit dem Rahmen (2) verbindbar oder verbunden sind, **dadurch gekennzeichnet, dass** die Stangen (3) dekomprimierbar sind, um die Softbox (1) von der komprimierten in die expandierte Konfiguration zu expandieren, **dadurch gekennzeichnet, dass** die mindestens eine Stange (3) aufblasbar ist.

2. Die Softbox (1) nach Anspruch 1, wobei die mindestens eine Stange (3) durch Gas aufblasbar ist.

3. Die Softbox (1) nach Anspruch 1, wobei die mindestens eine Stange (3) durch Flüssigkeit aufblasbar ist.

4. Die Softbox (1) nach Anspruch 1, wobei die mindestens eine Stange (3) eine komprimierbare und dekomprimierbare Füllung aufweist.

5. Softbox (1) nach einem der vorhergehenden Ansprüche, wobei der Rahmen (2) mindestens einen Stoff umfasst oder aus einem solchen hergestellt ist.

6. Softbox (1) nach einem der vorhergehenden Ansprüche, wobei der Rahmen eine Außenseite (4) aufweist, die nicht reflektierend ist, und eine Innenseite (5), die reflektierend ist.

7. Die Softbox (1) nach einem der vorhergehenden Ansprüche umfassend vier, sechs oder acht Stangen (3).

8. Softbox (1) nach einem der vorhergehenden Ansprüche, wobei der mindestens eine Stange (3) aus einem flexiblen Material, vorzugsweise Polyurethan, hergestellt ist.

9. Die Softbox (1) nach einem der vorhergehenden Ansprüche, umfassend einen Lampenbefestigungsabschnitt, um die Softbox (1) an einer Leuchte (6) zu befestigen.

10. Die Softbox (1) nach einem der vorhergehenden Ansprüche, die eine Abmessung von 30 x 30 cm bis 250 x 250 cm hat.

11. Die Softbox (1) nach einem der vorhergehenden Ansprüche, wobei die mindestens eine Stange (3) mit dem Rahmen (2) vernäht ist.

12. Softbox (1) nach einem der Ansprüche 1 bis 10, wobei die mindestens eine Stange (3) mit dem Rahmen (3) lösbar verbunden ist, vorzugsweise durch einen Klettverschluss.

13. Softbox (1) nach einem der Ansprüche 1-10, wobei die mindestens eine Stange (3) durch Magnete lösbar mit dem Rahmen (2) verbunden ist.

14. Die Softbox (1) nach einem der vorhergehenden Ansprüche, wobei die mindestens eine Stange (1) in den Rahmen (2) eingebettet ist.

## Revendications

1. Boîtier souple (1) pour une lumière photographique (6) ayant une configuration compressée et une configuration déployée, le boîtier souple (1) comprenant un cadre (2) et au moins un, de préférence plusieurs montants (3) reliés ou pouvant être reliés au cadre (2), **caractérisé en ce que** les montants (3) peuvent être décompressés pour déployer le boîtier souple (1) de la configuration compressée à la configuration déployée,
**caractérisé en ce que**
l'au moins un montant (3) est gonflable.

2. Boîtier souple (1) selon la revendication 1, dans lequel l'au moins un montant (3) est gonflable par un gaz.

3. Boîtier souple (1) selon la revendication 1, dans lequel l'au moins un montant (3) est gonflable par un liquide.

4. Boîtier souple (1) selon la revendication 1, dans lequel l'au moins un montant (3) comprend un remplissage pouvant être compressé et décompressé.

5. Boîtier souple (1) selon l'une quelconque des revendications précédentes, dans lequel le cadre (2) comprend ou est constitué d'au moins un tissu.

6. Boîtier souple (1) selon l'une quelconque des revendications précédentes, dans lequel le cadre comprend un côté externe (4) n'étant pas réfléchissant et un côté interne (5) étant réfléchissant.

7. Boîtier souple (1) selon l'une quelconque des revendications précédentes comprenant quatre, six ou huit montants (3).

8. Boîtier souple (1) selon l'une quelconque des revendications précédentes, dans lequel l'au moins un montant (3) est en matériau souple, de préférence en polyuréthane.

9. Boîtier souple (1) selon l'une quelconque des revendications précédentes comprenant une partie de fixation de lampe pour fixer le boîtier souple (1) à une lumière (6).

10. Boîtier souple (1) selon l'une quelconque des revendications précédentes ayant une dimension entre 30 x 30 cm et 250 x 250 cm.

11. Boîtier souple (1) selon l'une quelconque des revendications précédentes, dans lequel l'au moins un montant (3) est suturé au cadre (2).

12. Boîtier souple (1) selon l'une quelconque des revendications 1 à 10, dans lequel l'au moins un montant (3) est relié de façon détachable au cadre (3), de préférence par une fermeture velcro.

13. Boîtier souple (1) selon l'une quelconque des revendications 1 à 10, dans lequel l'au moins un montant (3) est relié de façon détachable au cadre (2) par des aimants.

14. Boîtier souple (1) selon l'une quelconque des revendications précédentes, dans lequel l'au moins un montant (1) est inclus dans le cadre (2).
